# FASCICULE DE BREVET EUROPEEN

(11) **EP 2 632 084 B1**
(45) Date de publication et mention de la délivrance du brevet: **16.09.2015**
(21) Numéro de dépôt: 13156756.2
(22) Date de dépôt: 26.02.2013
(51) Int. Cl.: H04L 12/28, G08C 19/28, H04L 29/06

(54) **Procédé de configuration d'une installation domotique**
Konfigurationsverfahren einer Heimanlage
Method for configuring a home-automation device

(30) Priorité: 27.02.2012 FR 1251751
(43) Date de publication de la demande: 28.08.2013
(73) Titulaire: SOMFY SAS, 74300 Cluses (FR)
(72) Inventeur: Desbiolles, Arnaud, 74800 Cornier (FR); Marmey, Stéphane, 74370 Naves Parmelan (FR); Mugnier, Mickaël, 74800 Saint Pierre en Faucigny (FR)
(74) Mandataire: Novaimo

(56) Documents cités:
- WO-A2-03/081352
- WO-A2-2004/109982

## Description

L'invention se rapporte au domaine de la commande à distance d'éléments d'une installation domotique, notamment d'éléments de type point de commande ou équipement pilotés par des actionneurs et notamment à la commande sans fil d'actionneurs pilotant des équipements domotiques, notamment des écrans de fermeture, d'occultation, de protection solaire ou de projection ou des dispositifs d'éclairage, de chauffage ou de climatisation. L'invention concerne en particulier un procédé de configuration d'une installation domotique. Elle concerne aussi un procédé de fonctionnement d'un dispositif de configuration. Elle concerne encore un dispositif de configuration apte à mettre en oeuvre l'un ou l'autre de ces procédés. Elle concerne encore une installation apte à mettre en oeuvre l'un ou l'autre de ces procédés.

Dans la conception actuelle de tels systèmes, de tels actionneurs et/ou capteurs associés sont pilotés par des points de commande, notamment des télécommandes sont capables de communiquer en réception mais aussi en émission par un lien bidirectionnel, typiquement radiofréquences. Les actionneurs ou capteurs et les unités de commande peuvent donc être qualifiées de façon générique d'objets bidirectionnels. Les actionneurs ou capteurs sont souvent disposés dans des parties difficilement accessibles pour l'installateur, et plus encore pour l'utilisateur.

Les points de commande sont unidirectionnels ou bidirectionnels, nomades ou fixes.

Une procédure d'appariement permet d'associer à un couple formé d'un équipement et d'un point de commande au moins un identifiant commun. Le partage d'un identifiant commun permet ensuite à l'équipement de reconnaître les commandes provenant du point de commande, pour y répondre. La procédure d'appariement peut être répétée pour commander plusieurs équipements à partir d'un point de commande ou encore pour qu'un équipement réponde à plusieurs points de commande. Selon les modes d'appariement, l'identifiant est transmis depuis l'unité de commande de l'équipement vers le point de commande qui l'enregistre, ou au contraire depuis le point de commande vers l'unité de commande de l'actionneur, qui l'enregistre.

Par exemple, WO 03/081352 décrit un procédé tel que dans le préambule de la revendication 1.

On connaît du document EP1490839 un procédé permettant d'exclure d'un réseau un point de commande ou un équipement, en particulier un point de commande volé ou perdu de sorte que celui-ci ne puisse plus communiquer avec les autres éléments du réseau.

Cependant, un problème se pose lorsque, dans une installation, on se retrouve avec une première partie d'installation commandée grâce à une première clé et une deuxième partie d'installation commandée grâce à une deuxième clé. Les deux parties d'installation peuvent tout à fait cohabiter, mais restent étrangères l'une à l'autre. Dans certains cas, par exemple si un point de commande de la première partie d'installation doit être utilisé pour piloter un actionneur de la deuxième partie d'installation, ou si on souhaite ajouter un nouveau point de commande commun aux deux parties d'installation, il est alors nécessaire de reconfigurer au moins l'une des deux parties de l'installation domotique, c'est-à-dire à redéfinir tous les liens existants entre tous les éléments de cette ou ces parties de l'installation. Ceci est bien entendu gênant et se produit typiquement lorsque plusieurs parties d'installation préconfigurées sont installées simultanément, ou lorsqu'on vient installer une deuxième partie d'installation dans un bâtiment déjà équipé avec une première partie d'installation de sorte à améliorer les fonctions domotiques assurées.

Le but de l'invention est de fournir un procédé de configuration d'une installation domotique remédiant aux inconvénients évoqués précédemment et améliorant les procédés connus de l'art antérieur. En particulier, l'invention propose un procédé de configuration simple et efficace, notamment un procédé intuitif et limitant le recours à un installateur.

Selon l'invention, le procédé régit la configuration d'une installation domotique comprenant au moins une première partie de l'installation domotique, une deuxième partie de l'installation domotique et un dispositif de configuration. La première partie de l'installation domotique comprend des éléments de type point de commande ou équipement, communiquant sur un premier réseau domotique, chaque élément de la première partie étant muni d'un identifiant et partageant une même première clé propre au premier réseau domotique et garantissant l'appartenance de l'élément au premier réseau domotique. La deuxième partie de l'installation domotique comprend des éléments de type point de commande ou équipement, communiquant sur un deuxième réseau domotique, chaque élément de la deuxième partie étant muni d'un identifiant et partageant une même deuxième clé propre au deuxième réseau domotique et garantissant l'appartenance de l'élément au deuxième réseau domotique. Le procédé comprend :
- une phase de transmission de la première clé, d'un élément de la première partie d'installation au dispositif de configuration,
- une phase de définition d'une nouvelle clé,
- une phase de transmission de la nouvelle clé, du dispositif de configuration à au moins un élément de la deuxième partie d'installation,
- une phase d'enregistrement de la nouvelle clé dans une mémoire de l'au moins un élément de la deuxième partie d'installation.

La phase de transmission de la première clé peut être itérée pour des éléments de type points de commande de la première partie d'installation.

Le procédé peut comprendre une phase de transmission de la deuxième clé, d'un élément de la deuxième partie d'installation au dispositif de configuration. La phase de transmission de la deuxième clé peut être itérée pour des éléments de type points de commande de la deuxième partie d'installation.

Le procédé peut comprendre une étape de transmission d'une troisième clé, d'un élément d'une troisième partie d'installation au dispositif de configuration.

La phase de définition de la nouvelle clé peut comprendre la génération d'une nouvelle clé, notamment une génération aléatoire d'une nouvelle clé ou le choix de la première clé et/ou de la deuxième clé comme nouvelle clé.

La phase de transmission de la nouvelle clé, et/ou la phase d'enregistrement de la nouvelle clé peut être itérée pour plusieurs éléments de l'installation, notamment pour tous les points de commande de l'installation comprenant des éléments de réception d'informations.

La phase d'enregistrement de la nouvelle clé peut provoquer l'effacement de la première ou deuxième clé précédemment en mémoire.

Selon l'invention, un procédé de fonctionnement d'un dispositif de configuration apte à mettre en oeuvre le procédé de configuration défini précédemment comprend :
- une phase de réception de la première clé,
- une phase de définition d'une nouvelle clé,
- une phase d'émission de la nouvelle clé.

L'invention porte aussi sur un support d'enregistrement de données lisible par un calculateur sur lequel est enregistré un programme d'ordinateur comprenant des éléments logiciels de mise en oeuvre des étapes d'un procédé défini précédemment.

Selon l'invention, un dispositif de configuration comprend des éléments matériels et/ou logiciels de mise en oeuvre d'un procédé défini précédemment.

Les éléments matériels et/ou logiciels peuvent comprendre :
- un élément de réception de la première clé,
- un élément de définition d'une nouvelle clé,
- un élément d'émission de la nouvelle clé.

Les éléments matériels et/ou logiciels peuvent comprendre une interface homme-machine, comme un ensemble écran et clavier, en particulier un écran tactile.

Selon l'invention, une installation domotique comprend des éléments matériels et/ou logiciels de mise en oeuvre d'un procédé défini précédemment.

L'installation domotique peut comprendre un dispositif de configuration défini précédemment.

L'invention porte aussi sur un programme informatique comprenant un élément de code de programme informatique adapté à la réalisation des étapes du procédé défini précédemment, lorsque le programme est exécuté sur un ordinateur.

L'invention sera mieux comprise à la lecture de la description qui va suivre, donnée uniquement à titre d'exemple et faite en se référant aux dessins annexés sur lesquels :
La figure 1 est un schéma d'un mode de réalisation d'une installation selon l'invention.
La figure 2 est un schéma d'un mode de réalisation d'un dispositif de configuration selon l'invention.
La figure 3 est un ordinogramme représentant une première partie des étapes d'un mode d'exécution d'un procédé de configuration selon l'invention.
La figure 4 est un ordinogramme représentant une deuxième partie des étapes du mode d'exécution du procédé de configuration selon l'invention.

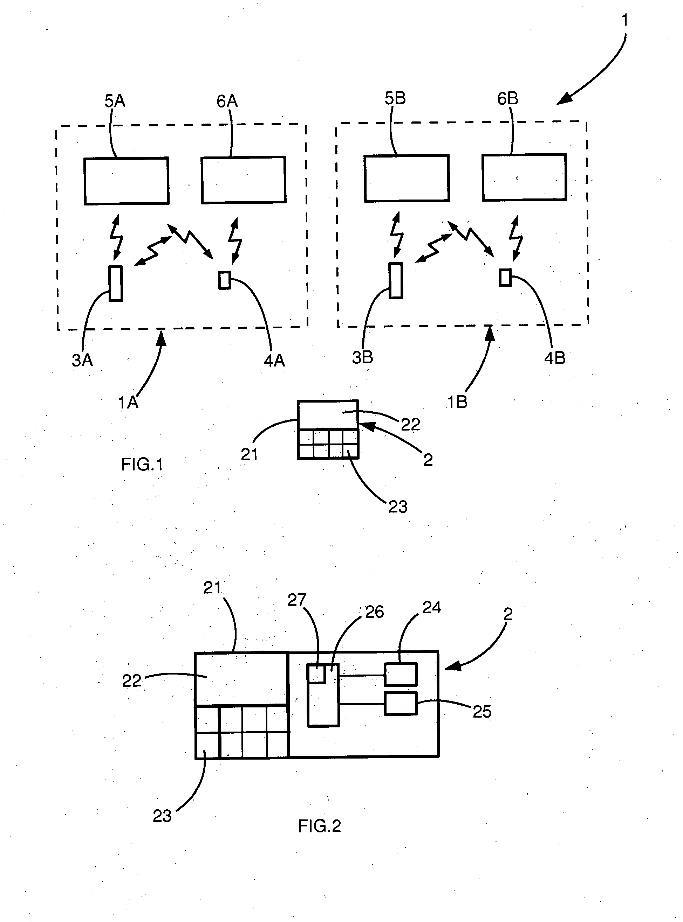

La figure 1 représente sous forme de schéma une installation domotique 1 selon l'invention. Sur la figure 1, on a représenté une première partie 1A de l'installation domotique comprenant des éléments ou équipements domotiques 3A, 4A, 5A, 6A communiquant sur un premier réseau domotique, les éléments domotiques constituant le premier réseau domotique. Chaque élément de la première partie est muni d'un identifiant, qu'il partage avec un ou plusieurs autres équipements de la première partie de l'installation, et partage une même première clé propre au premier réseau domotique, garantissant l'appartenance de l'élément au premier réseau domotique. De même, on a représenté une deuxième partie 1 B de l'installation domotique comprenant des éléments ou équipements domotiques 3B, 4B, 5B, 6B communiquant sur un deuxième réseau domotique, les éléments domotiques constituant le deuxième réseau domotique. Chaque élément de la deuxième partie est muni d'un identifiant, qu'il partage avec un ou plusieurs autres équipements de la deuxième partie de l'installation, et partage une même deuxième clé propre au deuxième réseau domotique, garantissant l'appartenance de l'élément au deuxième réseau domotique.

Par exemple, la première partie de l'installation comprend deux dispositifs de volets roulants motorisés 5A et 6A, chacun susceptible d'être commandé par une télécommande 3A ou par une télécommande 4A. On peut aussi plus généralement considérer les télécommandes comme étant des points de commande. Les télécommandes 3A et 4A sont par exemple des télécommandes bidirectionnelles, c'est-à-dire une télécommande capable non seulement d'émettre des signaux, notamment des signaux électromagnétiques, mais également capable de recevoir des signaux. Par exemple, on peut imaginer que la première partie de l'installation domotique a déjà été réalisée dans le bâtiment dans le passé.

Par exemple, la deuxième partie de l'installation comprend un dispositif de porte de garage motorisé 5B et un dispositif d'éclairage 6B, chacun susceptible d'être commandé par une télécommande 3B ou par une télécommande 4B. On peut aussi plus généralement considérer les télécommandes comme étant des points de commande. Les télécommandes 3B et 4B sont par exemple des télécommandes bidirectionnelles. Par exemple, on peut imaginer que la deuxième partie de l'installation domotique vient d'être réalisée dans le bâtiment.

Les parties d'installation domotique peuvent comprendre des éléments de différents types, comme des actionneurs, des capteurs ou des points de commande. Bien entendu, l'installation domotique peut comprendre un nombre beaucoup plus élevé de points de commande et/ou de capteurs et/ou d'actionneurs et peut comprendre d'autres éléments en plus ou remplacement des éléments énumérés précédemment, notamment des équipements de type actionneur de store de terrasse, de traitement de l'eau, de ventilation, etc., y compris de type domestique comme une machine à laver, un téléviseur etc. L'invention s'applique cependant préférentiellement à des éléments occupant une place fixe dans le bâtiment et au moins un des éléments étant de type équipement mobile sous l'action d'un actionneur électromécanique, c'est-à-dire apte à empêcher une intrusion, ce qui est ici le cas des quatre premiers équipements. De préférence, les éléments sont des équipements domotiques de type écran de fermeture, d'occultation, de protection solaire ou de projection ainsi que leurs télécommandes.

Tous les éléments de la première partie communiquent entre eux sur un même premier réseau domotique, de type local (LAN) et utilisant un protocole commun, par exemple io-homecontrol, EIB, Zigbee etc. (marques déposées). Préférentiellement, le réseau domotique est de type radiofréquences, ce qui est représenté par des flèches. Alternativement, plusieurs réseaux locaux de protocole et/ou de media différents sont utilisés pour former le premier réseau domotique. Les éléments comprennent donc chacun un élément de liaison permettant la communication dans le réseau domotique. Tous les éléments de la première partie partagent la première clé commune. Cette clé est par exemple un mot de 64 ou 128 bits, logé dans une mémoire de chaque élément et un algorithme d'authentification utilisant la première clé est utilisé pour permettre à un équipement de reconnaître qu'un ordre de commande ou un message quelconque est bien issu d'un élément de la même installation.

Par la suite, on dira pour simplifier qu'un message « contient la clé » ou « comprend la clé » quand l'appartenance de son émetteur à la partie d'installation correspondante est vérifiée en utilisant la clé commune. En pratique, cette vérification est réalisée par un dialogue entre l'émetteur du message et son destinataire, ou est réalisée par un cryptage du contenu du message à l'aide de la clé, ou encore nécessite à la fois un dialogue et un cryptage du contenu du message. La clé n'est donc pas nécessairement contenue, en tant que telle, dans les messages.

De la même façon, les éléments de la deuxième partie d'installation domotique communiquent sur un deuxième réseau domotique, utilisant le même protocole que le premier réseau domotique. Une deuxième clé est partagée par tous les éléments du deuxième réseau domotique.

La première clé et la deuxième clé étant a priori différentes, il n'est pas possible de commander les éléments 5A ou 6A avec les télécommandes 3B ou 4B. De la même façon, il n'est pas possible de commander les éléments 5B ou 6B avec les télécommandes 3A ou 4A. Pour rendre possible ce type de commande, une reconfiguration de la première partie de l'installation domotique et/ou de la deuxième partie de l'installation domotique est nécessaire.

Pour éviter cet inconvénient, il est possible de reconfigurer de manière simple tout ou partie de l'installation en utilisant un dispositif de configuration 2. Ce dispositif de configuration fait avantageusement partie de l'installation domotique 1. Il s'agit par exemple d'une télécommande évoluée, comprenant par exemple une interface de programmation (ou de configuration) et une interface de commande, permettant à cette télécommande d'être utilisée comme un outil de configuration et comme un point de commande dans l'installation.

Le dispositif de configuration 2 comprend principalement un élément 24 de réception de signaux, notamment de signaux électromagnétiques, un élément 25 d'émission de signaux et un calculateur 26 relié à l'élément d'émission et à l'élément de réception. Le calculateur comprend avantageusement une mémoire 27, cette mémoire étant destinée à stocker une ou plusieurs clés. Le dispositif de configuration comprend encore une interface homme-machine 21. Cette interface comprend de préférence un écran 22 et un clavier 23. L'ensemble clavier et écran peut être réalisé par un clavier tactile.

L'installation selon invention, en particulier le dispositif de configuration selon l'invention, en particulier encore le calculateur 26 comprend des éléments matériels et/ou logiciels permettant de régir son fonctionnement conformément aux procédés objets de l'invention. Les éléments logiciels peuvent notamment comprendre un élément de code de programme informatique adapté à la réalisation des étapes du procédé selon l'invention, lorsque le programme tourne sur un ordinateur. Les éléments matériels comprennent :
- des éléments de transmission de la première clé, d'un élément de la première partie d'installation au dispositif de configuration, et/ou
- des éléments de définition d'une nouvelle clé, et/ou
- des éléments de transmission de la nouvelle clé, du dispositif de configuration à au moins un élément de la deuxième partie d'installation, et/ou
- des éléments d'enregistrement de la nouvelle clé dans une mémoire de l'au moins un élément de la deuxième partie d'installation.

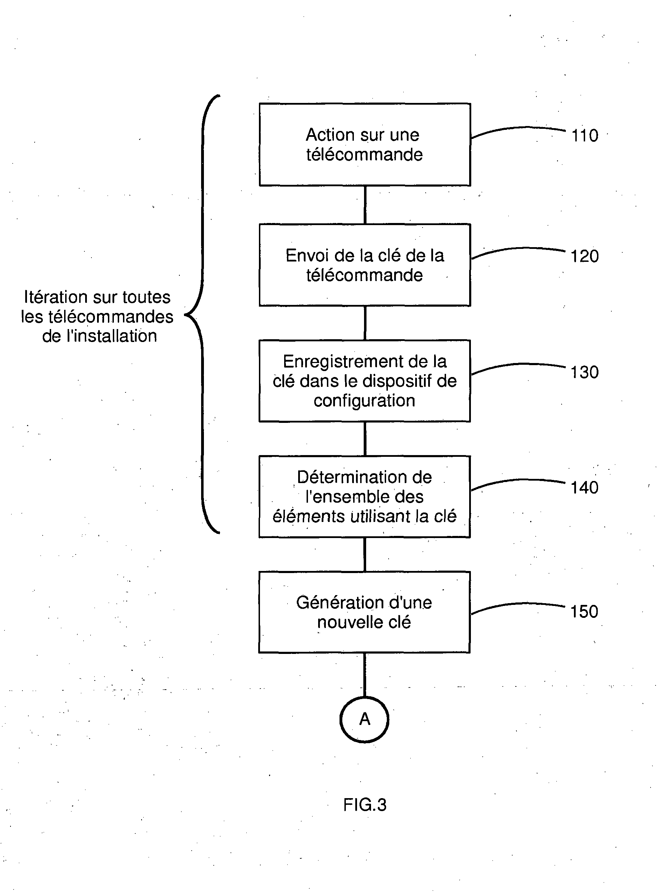

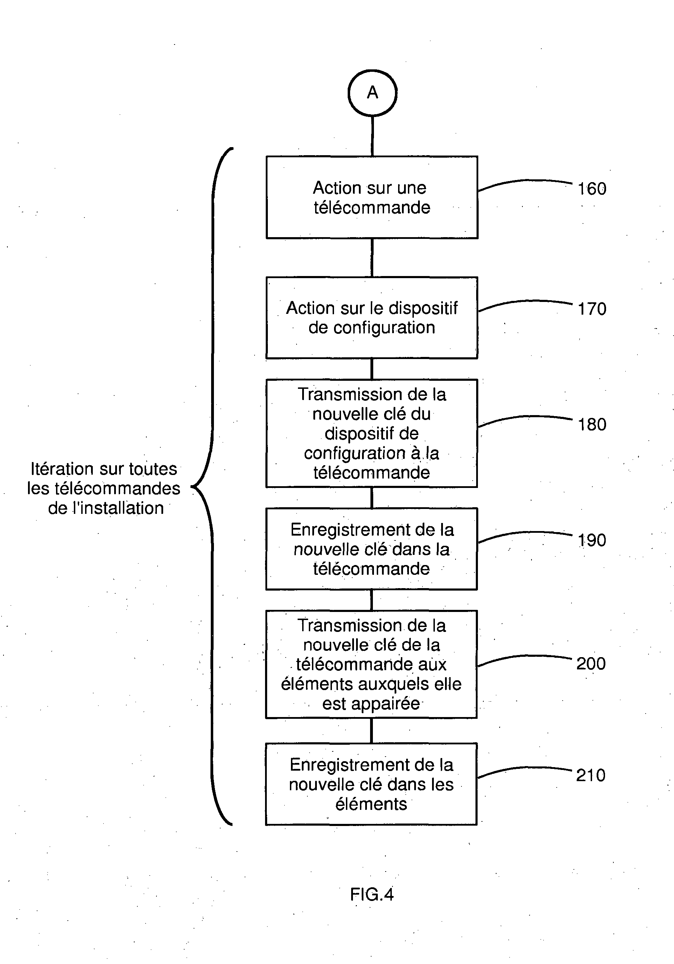

Un mode d'exécution d'un procédé de configuration d'une installation selon invention et un mode d'exécution d'un procédé de fonctionnement d'un dispositif de configuration selon l'invention sont décrits ci-après en référence aux figures 3 et 4.

Dans une première étape 110, on agit sur une télécommande, par exemple la télécommande 3A, pour la faire passer dans un mode particulier de fonctionnement, dit mode de transmission de clé. Ce mode particulier de fonctionnement est par exemple déclenché par une action particulière de l'utilisateur sur la télécommande.

Dans une deuxième étape 120, le fonctionnement particulier de la télécommande implique l'émission par celle-ci de la première clé qu'elle contient en mémoire.

Dans une troisième étape 130, on agit sur le dispositif de configuration pour le faire passer dans un mode particulier de fonctionnement, dit mode d'écoute. La première clé est alors reçue par le dispositif de configuration, via l'élément de réception 24, et celui-ci enregistre la première clé dans sa mémoire 27.

Dans une quatrième étape 140, une étape de découverte est mise en oeuvre. Dans cette étape de découverte, le dispositif de configuration recherche tous les éléments de l'installation déjà capables de communiquer avec la télécommande 3A, grâce notamment au partage de la première clé avec le dispositif de configuration. La liste de ces éléments est générée et stockée en mémoire.

Dans une première phase du procédé de configuration, dite « phase de transmission de la clé », il est possible de réitérer l'ensemble des étapes 110 à 140 sur toutes les télécommandes de l'installation. Dans cette première phase, on transmet donc la première clé, d'un élément de la première partie d'installation au dispositif de configuration et la deuxième clé d'un élément de la deuxième partie d'installation au dispositif de configuration. Seule une partie des étapes peut être réitérée, notamment il suffit au dispositif de configuration d'être informé de l'existence d'une première et d'une deuxième clé dans l'installation. Ceci permet au dispositif de configuration de constater que la première clé et la deuxième clé diffèrent, et de proposer de les homogénéiser.

À la fin de cette première phase, le dispositif de configuration connaît toutes les clés utilisées dans l'installation et éventuellement tous les éléments communiquant avec chacune des télécommandes.

Dans une cinquième étape 150, le dispositif de configuration génère une nouvelle clé. Cette nouvelle clé peut être générée aléatoirement ou générée d'une autre manière. Alternativement, cette nouvelle clé peut être choisie par l'utilisateur. Notamment, la nouvelle clé peut être définie comme étant l'une des clés dans le dispositif de configuration lors de la première phase du procédé, par exemple la première clé. Cette étape constitue une phase de définition d'une nouvelle clé.

Dans une sixième étape 160, on agit sur une télécommande, par exemple la télécommande 3A, pour la faire passer dans un mode particulier de fonctionnement, dit mode d'écoute. Ce mode particulier de fonctionnement est par exemple déclenché par une action particulière de l'utilisateur sur la télécommande. Dans ce mode de fonctionnement particulier, la télécommande est à l'écoute des messages émis par les autres éléments de l'installation.

Dans une septième étape 170, on agit sur le dispositif de configuration pour le faire passer dans un mode particulier de fonctionnement, dit mode de transmission de clé. Ce mode particulier de fonctionnement est par exemple déclenché par une action particulière de l'utilisateur sur le dispositif de configuration.

Dans une huitième étape 180, dans le mode de fonctionnement particulier, le dispositif de configuration émet la nouvelle clé à destination de la télécommande se trouvant à l'écoute.

Dans une neuvième étape 190, la télécommande enregistre la nouvelle clé dans sa mémoire. Par exemple, la nouvelle clé remplace la clé qui était précédemment stockée en mémoire. Alternativement, la nouvelle clé est stockée dans une mémoire en plus de la clé qui était précédemment stockée en mémoire.

Dans une dixième étape 200, la télécommande émet la nouvelle clé à destination des éléments avec lesquels elle était précédemment appairée. Le dispositif peut vérifier, à l'aide de la liste des éléments stockée en mémoire, que la clé est bien diffusée aux éléments. Alternativement, la nouvelle clé peut être transmise aux éléments appairés avec la télécommande, directement par le dispositif de configuration, celui-ci ayant connaissance de ces différents éléments.

Dans une onzième étape 210, les éléments ayant reçu la nouvelle clé l'enregistrent dans leur mémoire. Par exemple, la nouvelle clé remplace la clé qui était précédemment stockée en mémoire. Alternativement, la nouvelle clé est stockée dans une mémoire en plus de la clé qui était précédemment stockée en mémoire.

Dans une troisième phase du procédé de configuration, dite d'homogénéisation, on itère l'ensemble des étapes 160 à 210 sur toutes les télécommandes de l'installation, plus exactement sur toutes les télécommandes bidirectionnelles de l'installation. En effet, seules les télécommandes bidirectionnelles sont capables de recevoir la nouvelle clé. Dans cette dernière phase, on transmet donc la nouvelle clé, du dispositif de configuration à au moins un élément de la deuxième partie d'installation, notamment à une télécommande de la deuxième partie d'installation et on enregistre la nouvelle clé dans une mémoire de l'au moins un élément de la deuxième partie d'installation.

À la fin de cette troisième phase, toutes les télécommandes bidirectionnelles et tous les éléments bidirectionnels connaissent la nouvelle clé et l'ont stockée dans leur mémoire. Ainsi, tout élément commandé initialement par une télécommande bidirectionnelle peut a priori après mise en oeuvre du procédé être commandé par une autre télécommande bidirectionnelle, même si initialement cette télécommande bidirectionnelle n'utilisait pas la même clé que l'élément commandé.

Le procédé et les différentes phases décrites peuvent être également partiellement mises en oeuvre à partir de télécommandes unidirectionnelles. Les équipements bidirectionnels appairés à des télécommandes unidirectionnelles peuvent également apprendre une nouvelle clé, ceci ne remettant pas en cause les liens avec la télécommande unidirectionnelle, notamment l'appairage, ou le partage d'une clé entre la telécommande unidirectionnelle et un ou plusieurs équipements domotiques.

Dans l'exemple la figure 1, après mise en oeuvre du procédé de configuration selon invention, il est a priori possible de commander l'élément domotique 5B ou l'élément domotique 6B avec la télécommande bidirectionnelle 3A. De même, il est a priori possible de commander l'élément domotique 5A ou l'élément domotique 6A avec la télécommande bidirectionnelle 3B. Il suffit pour cela de créer un appairage entre ces éléments, c'est-à-dire d'échanger un identifiant commun. Toutefois, cela n'était pas possible avant de mettre en oeuvre le procédé de configuration selon l'invention, les première et seconde clés étant précédemment différentes.

En variante, dans la phase de transmission de la nouvelle clé du dispositif de configuration à au moins un élément de la deuxième partie de l'installation, on peut itérer une étape de réception de la nouvelle clé sur seulement certains éléments de l'installation, notamment sur seulement certaines télécommandes bidirectionnelles. En conséquence, dans la phase d'enregistrement, on peut itérer une étape d'enregistrement de la nouvelle clé seulement sur les télécommandes ayant reçu la nouvelle clé, et sur les éléments de l'installation qui sont liés à ces télécommandes. La nouvelle clé peut ensuite être diffusée par l'intermédiaire de la télécommande ayant connaissance de la nouvelle clé.

Avantageusement, le dispositif de configuration comprend des éléments d'interface aptes à guider l'utilisateur au cours du procédé de configuration, notamment des éléments indiquant les actions que doit exécuter l'utilisateur, telles que des actions de contact ou d'appui sur une télécommande ou sur un bouton de celle-ci ou des actions de validation déclenchant des réactions d'éléments de l'installation. Ces éléments d'interface sont inclus dans l'interface 21.

Pour déterminer les éléments domotiques en présence dans l'installation ou des éléments domotiques auxquels sont associés une ou plusieurs télécommandes, on peut utiliser des procédures de découverte.

Le procédé de configuration est avantageusement mis en oeuvre pour l'homogénéisation des clés d'une installation comprenant au départ deux ou plus parties d'installation ayant leur propre clé. En suivant les étapes et en réitérant ces étapes pour toutes les télécommandes de l'installation, réunies pour l'occasion, le procédé peut aboutir à une réunification des clés de manière tout à fait transparente pour l'utilisateur. De manière optimale, la génération d'une nouvelle clé est réalisée suite à la transmission de toutes les différentes clés de l'installation. Ainsi, par exemple, la clé la plus communément utilisée dans l'installation sera choisie comme nouvelle clé.

## Revendications

1. Procédé de configuration d'une installation domotique (1) comprenant au moins une première partie (1A) de l'installation domotique, une deuxième partie (1 B) de l'installation domotique et un dispositif de configuration (2) :
- la première partie de l'installation domotique comprenant des éléments (3A, 4A, 5A, 6A) de type point de commande ou équipement, communiquant sur un premier réseau domotique, chaque élément de la première partie étant muni d'un identifiant et partageant une même première clé propre au premier réseau domotique et garantissant l'appartenance de l'élément au premier réseau domotique, et
- la deuxième partie de l'installation domotique comprenant des éléments (3B, 4B, 5B, 6B) de type point de commande ou équipement, communiquant sur un deuxième réseau domotique, chaque élément de la deuxième partie étant muni d'un identifiant et partageant une même deuxième clé propre au deuxième réseau domotique et garantissant l'appartenance de l'élément au deuxième réseau domotique,
**caractérisé en ce que** le procédé comprend :
- une phase de transmission de la première clé, d'un élément de la première partie d'installation au dispositif de configuration,
- une phase de définition d'une nouvelle clé,
- une phase de transmission de la nouvelle clé, du dispositif de configuration à au moins un élément de la deuxième partie d'installation,
- une phase d'enregistrement de la nouvelle clé dans une mémoire de l'au moins un élément de la deuxième partie d'installation.

2. Procédé selon la revendication 1, **caractérisé en ce que** la phase de transmission de la première clé est itérée pour des éléments de type points de commande de la première partie d'installation.

3. Procédé selon l'une des revendications précédentes, **caractérisé en ce qu'il** comprend une phase de transmission de la deuxième clé, d'un élément de la deuxième partie d'installation au dispositif de configuration.

4. Procédé selon la revendication précédente, **caractérisé en ce que** la phase de transmission de la deuxième clé est itérée pour des éléments de type points de commande de la deuxième partie d'installation.

5. Procédé selon l'une des revendications précédentes, **caractérisé en ce qu'**il comprend une étape de transmission d'une troisième clé, d'un élément d'une troisième partie d'installation au dispositif de configuration.

6. Procédé selon l'une des revendications précédentes, **caractérisé en ce que** la phase de définition de la nouvelle clé comprend la génération d'une nouvelle clé, notamment une génération aléatoire d'une nouvelle clé ou le choix de la première clé et/ou de la deuxième clé comme nouvelle clé.

7. Procédé selon l'une des revendications précédentes, **caractérisé en ce que** la phase de transmission de la nouvelle clé, et/ou la phase d'enregistrement de la nouvelle clé est itérée pour plusieurs éléments de l'installation, notamment pour tous les points de commande de l'installation comprenant des éléments de réception d'informations.

8. Procédé selon l'une des revendications précédentes, **caractérisé en ce que** la phase d'enregistrement de la nouvelle clé provoque l'effacement de la première ou deuxième clé précédemment en mémoire.

9. Procédé de fonctionnement d'un dispositif de configuration (2) apte à mettre en oeuvre le procédé de configuration selon l'une des revendications précédentes, **caractérisé en ce que** le procédé comprend :
- une phase de réception de la première clé,
- une phase de définition d'une nouvelle clé,
- une phase d'émission de la nouvelle clé.

10. Support d'enregistrement de données lisible par un calculateur sur lequel est enregistré un programme d'ordinateur comprenant des éléments logiciels de mise en oeuvre des étapes d'un procédé selon l'une des revendications précédentes.

11. Dispositif de configuration (2) comprenant des éléments (21, 22, 23, 24, 25, 26, 27) matériels et/ou logiciels de mise en oeuvre du procédé selon l'une des revendications 1 à 9.

12. Dispositif de configuration selon la revendication 11, **caractérisé en ce que** les éléments matériels et/ou logiciels comprennent :
- un élément (24) de réception de la première clé,
- un élément (26) de définition d'une nouvelle clé,
- un élément (25) d'émission de la nouvelle clé.

13. Dispositif de configuration selon la revendication 11 ou 12, **caractérisé en ce que** les éléments matériels et/ou logiciels comprennent une interface homme-machine (21), comme un ensemble écran (22) et clavier (23), en particulier un écran tactile.

14. Installation domotique (1) comprenant des éléments matériels (3A, 4A, 5A, 6A, 3B, 4B, 5B, 6B, 21, 22, 23, 24, 25, 26, 27) et/ou logiciels de mise en oeuvre du procédé selon l'une des revendications 1 à 9.

15. Installation domotique selon la revendication précédente, **caractérisée en ce qu'**elle comprend un dispositif de configuration (2) selon l'une des revendications 11 à 13.

## Patentansprüche

1. Verfahren zur Konfiguration einer Heimanlage (1), umfassend mindestens einen ersten Teil (1A) der Heimanlage, einen zweiten Teil (1B) der Heimanlage und eine Konfigurationseinrichtung (2):
- wobei der erste Teil der Heimanlage Elemente (3A, 4A, 5A, 6A) des Typs Kontrollpunkt oder Gerät umfasst, die in einem ersten Heimnetzwerk kommunizieren, wobei jedes Element des ersten Teils mit einem Identifikator versehen ist und einen selben ersten Schlüssel, der dem ersten Heimnetzwerk eigen ist und die Zugehörigkeit des Elements zum ersten Heimnetzwerk garantiert, teilt, und
- wobei der zweite Teil der Heimanlage Elemente (3B, 4B, 5B, 6B) des Typs Kontrollpunkt oder Gerät umfasst, die in einem zweiten Heimnetzwerk kommunizieren, wobei jedes Element des zweiten Teils mit einem Identifikator versehen ist und einen selben zweiten Schlüssel, der dem zweiten Heimnetzwerk eigen ist und die Zugehörigkeit zum zweiten Heimnetzwerk garantiert, teilt,
**dadurch gekennzeichnet, dass** das Verfahren umfasst:
- eine Phase der Übertragung des ersten Schlüssels von einem Element des ersten Anlageteils auf die Konfigurationseinrichtung,
- eine Phase der Definition eines neuen Schlüssels,
- eine Phase der Übertragung des neuen Schlüssels von der Konfigurationseinrichtung auf mindestens ein Element des zweiten Anlageteils,
- eine Phase der Aufzeichnung des neuen Schlüssels in einem Speicher des mindestens einen Elements des zweiten Anlageteils.

2. Verfahren nach Anspruch 1, **dadurch gekennzeichnet, dass** die Übertragungsphase des ersten Schlüssels für Elemente des Typs Kontrollpunkte des ersten Anlageteils iteriert wird.

3. Verfahren nach einem der vorhergehenden Ansprüche, **dadurch gekennzeichnet, dass** es eine Phase der Übertragung des zweiten Schlüssels von einem Element des zweiten Anlageteils auf die Konfigurationseinrichtung umfasst.

4. Verfahren nach dem vorhergehenden Anspruch, **dadurch gekennzeichnet, dass** die Übertragungsphase des zweiten Schlüssels für Elemente des Typs Kontrollpunkte des zweiten Anlageteils iteriert wird.

5. Verfahren nach einem der vorhergehenden Ansprüche, **dadurch gekennzeichnet, dass** es einen Schritt der Übertragung eines dritten Schlüssels von einem Element des dritten Anlageteils auf die Konfigurationseinrichtung umfasst.

6. Verfahren nach einem der vorhergehenden Ansprüche, **dadurch gekennzeichnet, dass** die Phase der Definition des neuen Schlüssels die Erzeugung eines neuen Schlüssels umfasst, insbesondere die zufällig Erzeugung eines neuen Schlüssels oder die Wahl des ersten Schlüssels und/oder des zweiten Schlüssels als neuen Schlüssel.

7. Verfahren nach einem der vorhergehenden Ansprüche, **dadurch gekennzeichnet, dass** die Phase der Übertragung des neuen Schlüssels und/oder die Phase der Aufzeichnung des neuen Schlüssels für mehrere Elemente der Anlage iteriert wird, insbesondere für alle Kontrollpunkte der Anlage, umfassend Informationsempfangselemente.

8. Verfahren nach einem der vorhergehenden Ansprüche, **dadurch gekennzeichnet, dass** die Phase der Aufzeichnung des neuen Schlüssels das Löschen des erste oder zweiten vorher im Speicher befindlichen Schlüssels hervorruft.

9. Funktionsverfahren einer Konfigurationseinrichtung (2), die geeignet ist, das Konfigurationsverfahren nach einem der vorhergehenden Ansprüche einzusetzen, **dadurch gekennzeichnet, dass** das Verfahren umfasst:
- eine Phase des Empfangs des ersten Schlüssels,
- eine Phase der Definition eines neuen Schlüssels,
- eine Phase des Sendens des neuen Schlüssels.

10. Von einem Rechner lesbarer Datenaufzeichnungsträger, auf dem ein Computerprogramm aufgezeichnet ist, umfassend Softwareelemente für den Einsatz der Schritte eines Verfahrens nach einem der vorhergehenden Ansprüche.

11. Konfigurationseinrichtung (2), umfassend Hardware- und/oder Softwareelemente (21, 22, 23, 24, 25, 26, 27) für den Einsatz des Verfahrens nach einem der Ansprüche 1 bis 9.

12. Konfigurationseinrichtung nach Anspruch 11, **dadurch gekennzeichnet, dass** die Hardware- und/oder Softwareelemente umfassen:
- ein Element (24) für den Empfang des ersten Schlüssels,
- ein Element (26) zur Definition eines neuen Schlüssels,
- ein Element (25) zum Senden des neuen Schlüssels.

13. Konfigurationseinrichtung nach Anspruch 11 oder 12, **dadurch gekennzeichnet, dass** die Hardware- und/oder Softwareelemente eine Mensch-Maschine-Schnittstelle (21), wie eine Einheit Bildschirm (22) und Tastatur (23), insbesondere einen Touchscreen, umfassen.

14. Heimanlage (1), umfassend Hardware- und/oder Softwareelemente (3A, 4A, 5A, 6A, 3B, 4B, 5B, 6B, 21, 22, 23, 24, 25, 26, 27) für den Einsatz des Verfahrens nach einem der Ansprüche 1 bis 9.

15. Heimanlage nach dem vorhergehenden Anspruch, **dadurch gekennzeichnet, dass** sie eine Konfigurationseinrichtung (2) nach einem der Ansprüche 11 bis 13 umfasst.

## Claims

1. Method for configuring a home-automation installation (1) comprising at least one first part (1A) of the home-automation installation, one second part (1B) of the home-automation installation and one configuration device (2):
- the first part of the home-automation installation comprising elements (3A, 4A, 5A, 6A) of remote control unit type or equipment, communicating over a first home-automation network, each element of the first part being provided with an identifier and sharing one and the same first key specific to the first home-automation network and ensuring the belonging of the element to the first home-automation network, and
- the second part of the home-automation installation comprising elements (3B, 4B, 5B, 6B) of remote control unit type or equipment, communicating over a second home-automation network, each element of the second part being provided with an identifier and sharing one and the same second key specific to the second home-automation network and ensuring the belonging of the element to the second home-automation network,
**characterized in that** the method comprises:
- a phase of transmitting the first key, from an element of the first installation part to the configuration device,
- a phase of defining a new key,
- a phase of transmitting the new key, from the configuration device to at least one element of the second installation part,
- a phase of recording the new key in a memory of the at least one element of the second installation part.

2. Method according to Claim 1, **characterized in that** the phase of transmitting the first key is iterated for elements of remote control unit type of the first installation part.

3. Method according to either of the preceding claims, **characterized in that** it comprises a phase of transmitting the second key, from an element of the second installation part to the configuration device.

4. Method according to the preceding claim, **characterized in that** the phase of transmitting the second key is iterated for elements of remote control unit type of the second installation part.

5. Method according to one of the preceding claims, **characterized in that** it comprises a step of transmitting a third key, from an element of a third installation part to the configuration device.

6. Method according to one of the preceding claims, **characterized in that** the phase of defining the new key comprises the generation of a new key, notably a random generation of a new key or the choice of the first key and/or of the second key as the new key.

7. Method according to one of the preceding claims, **characterized in that** the phase of transmitting the new key, and/or the phase of recording the new key, is iterated for several elements of the installation, notably for all the remote control units of the installation comprising elements for receiving information.

8. Method according to one of the preceding claims, **characterized in that** the phase of recording the new key causes the erasure of the first or second key previously in memory.

9. Method for operating a configuration device (2) capable of implementing the configuration method according to one of the preceding claims, **characterized in that** the method comprises:
- a phase of receiving the first key,
- a phase of defining a new key,
- a phase of transmitting the new key.

10. Data recording medium that can be read by a computer on which a computer program is recorded comprising software elements for implementing the steps of a method according to one of the preceding claims.

11. Configuration device (2) comprising hardware and/or software elements (21, 22, 23, 24, 25, 26, 27) for implementing the method according to one of Claims 1 to 9.

12. Configuration device according to Claim 11, **characterized in that** the hardware and/or software elements comprise:
- an element (24) for receiving the first key,
- an element (26) for defining a new key,
- an element (25) for transmitting the new key.

13. Configuration device according to Claim 11 or 12, **characterized in that** the hardware and/or software elements comprise a man-machine interface (21), such as a screen (22) and keypad (23) set, in particular a touch-sensitive screen.

14. Home-automation installation (1) comprising hardware elements (3A, 4A, 5A, 6A, 3B, 4B, 5B, 6B, 21, 22, 23, 24, 25, 26, 27) and/or software elements for implementing the method according to one of Claims 1 to 9.

15. Home-automation installation according to the preceding claim, **characterized in that** it comprises a configuration device (2) according to one of Claims 11 to 13.
